# EUROPEAN PATENT SPECIFICATION

(11) **EP 1 190 184 B1**
(45) Date of publication and mention of the grant of the patent: **31.08.2005**
(21) Application number: 00961276.3
(22) Date of filing: 05.06.2000
(51) Int. Cl.: F16F 9/48

(54) **AUTOMOTIVE SELF-ADJUSTABLE DAMPER WITH A SELF-CORRECTING DISSIPATION CHARACTERISTIC**
SELBSTREGULIERENDER KRAFTFAHRZEUGDÄMPFER MIT SELBSTKORRIGIERENDER DÄMPFUNGSCHARAKTERISTIK
AMORTISSEUR AUTO-AJUSTABLE AVEC CARACTERISTIQUES AUTO-CORRECTRICES DISSIPATIVES

(30) Priority: 04.06.1999 RO 9900650
(43) Date of publication of application: 27.03.2002
(73) Proprietor: Niculescu, Adrian Ioan, R-Pitesti (RO)
(72) Inventor: Niculescu, Adrian Ioan, R-Pitesti (RO)
(74) Representative: Hano, Christian
(86) International application number: PCT/RO2000/000012
(87) International publication number: WO 2000/079148

(56) References cited:
- FR-A- 553 667
- FR-A- 2 479 386
- US-A- 2 332 161
- US-A- 2 944 639
- "MONROE SENSA-TRAC, UN NOUVEAU CONCEPT" REVUE TECHNIQUE AUTOMOBILE,FR,ETAI. BOULOGNE-BILLANCOURT, vol. 49, no. 567, 1 November 1994 (1994-11-01), page 351 XP000472648 ISSN: 0017-307X

## Description

The invention refers to an automotive self-adjustable shock absorber having according to the preamble of claim 1.

The automotive self-adjustable shock absorber has a progressive damping characteristic meant to be used with vehicles and motor vehicles for damping the swing of the wheels, chassis, bodies, the drivers and passenger seats, the engine set as well as in bumpers for impact energy absorption. Depending on the situation it can be used unpressurized, at a low pressure for improving the damping characteristic or pressurized at a high pressure for assuring a buoyant force too.

At high pressures, it can be used as a stabilizer for the bonnets and doors both for vehicles and motor vehicles and for civil and industrial constructions, furniture and different household articles.

For damping the oscillations, it is recommendable to use high damping coefficients, which have the disadvantage of reducing the comfort. The active and semi-active suspensions assure the variation of the damping coefficients function of the needs but are complicated to build, they are expensive and require high power consumptions.

US-A-2 332 161 discloses an automotive self-adjustable shock absorber according to the preamble of claim1 and having variable damping characteristics in three steps during compression and rebound stroke. Two annular bodies are arranged on an inner cylinder comprising torical damping valves at the upper and lower sides, a damping valve in a valve body and a damping valve in the piston. Both torical damping valves work at compression and rebound stroke. During the movement of the piston in the working cylinder the number of active damping valves differ. At the beginning of the stroke three damping valves are active, then two and finally one at the end of the stroke. Filling is accomplished by non-return valves placed on the upper annular body and on the lower annular body indirectly by siphoning. Due to the siphoning system and the complex filling-damping valves the construction of the known shock absorber is very complicated. Further, the number of adjusting steps is low.

The problem underlying the invention is to provide by technological simple means a reliable automotive self-adjustable shock absorber assuring a good self-adjustable damping characteristic.

This problem is solved by a reliable automotive self-adjustable shock absorber comprising the features of claim 1. Preferred embodiments are claimed in claims 2 to 20.

The shock absorber according to the invention assures a large range of damping coefficients depending on the position of the piston in the cylinder. Further the construction is relatively simple. Both, on rebound and compression, the damping coefficients have low values at the beginning of the strokes, the values becoming medium at the middle of the stroke and very high close to the end of the stroke. Thus, a good adherency between the wheel and the road, good comfort and protection at the end of the stroke is assured.

This shock absorber is made up of several systems: energy dissipation system, rod volume compensation system, the guiding sealing system and the resistance part protecting all these systems. The most principal one is the energy dissipation system consisting of a cylinder, closed at ends with blocks containing or no filling valves or mixed ones filling and checking, having sideways checking valves and eventually filling valves, placed optimum between the two ends. A piston with or without checking valves but without filling valves runs inside the cilynder. Due to this structure the moving of the piston is easier at the beginning of the stroke because the discarge of the working fluid is on several valves. As the piston approaches the end of the stroke the number of the valves implied decreasses, the resistance increasing accordingly. The situation is similar for both strokes: compression and rebound.

The compensation of the volume of the rod carrying out the stroke can be made through compensating rooms placed above the valves or below them, with a pressurized bladder and with external compensating rooms, at atmospheric pressure or pressurized.

According to the invention the shock absorber has the following advantages:
- at the beginning of the stroke it assures low damping coefficients allowing the system to reach quickly the medium working area permitting thus a good confort;
- it assures medium damping coefficients in the medium working area that is an optimum compromise between adherency and comfort;
- after the medium area it provides increased damping coefficients for a good damping of the carosserie oscillations and assuring a good adherency;
- to the end of the stroke it provides high damping coefficients eliminating the cushoning at the end of stroke protecting thus the carosserie, mechanic, improving the passanger comfort and eliminating the noise specific to this regime;
- with the simple versions the piston does not have valves and the valves located on the inner cylinder are reduced to calibrated holes/ slots providing thus a constructive simplicity, robustness and a low price;
- by applying the version with piston with membranes or little pistons the comfort and adherency at small dislevelment are increased and improve the damping along the others sections which, under these circumstances can be tared for stronger adjustments;
- the replacement of the inner cylinder with valves with a porous cylinder with controlled capillarity assures a solution of a great simplicity, robustness, fiability and low price;
- it is better used to achieve semiactive suspensions having practically infinite checking possibilities;
- it allows achieving the shock- absorbers for parashock bumper, reinforced and adjusted according to the new destination;
- pressurized and tared accordingly it can be used as door balancer, damper for 5th door of break , shock absorber for revolving doors on vertical axes, for the suspension of the engines or of the driver and passenger seats;
- the lamination of the working fluid through several valves increases the fiability , reduces the noise level and assures a low thermal regime;

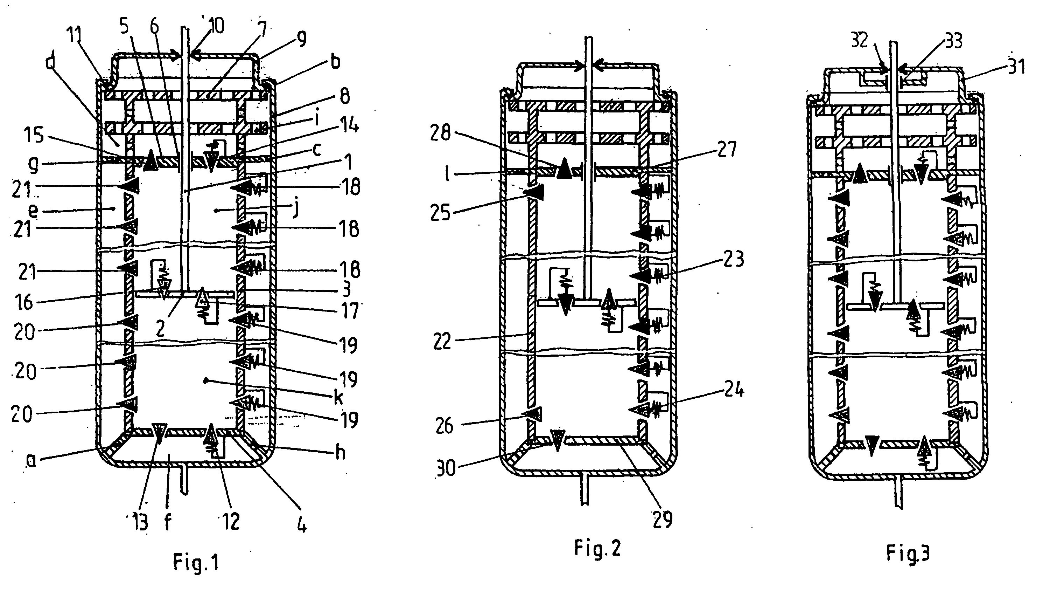

We give 27 examples of achieving the invention referring to figures 1...30 representing:
figure 1: the general design of principle containing the proposed solution, according to the first accomplishing example;
figure 2: the design for the version with checking valves located only in the inner cylinder according to the second accomplishing example;
figure 3: the design for the version with two rod guidings, according to the third accomplishing example;

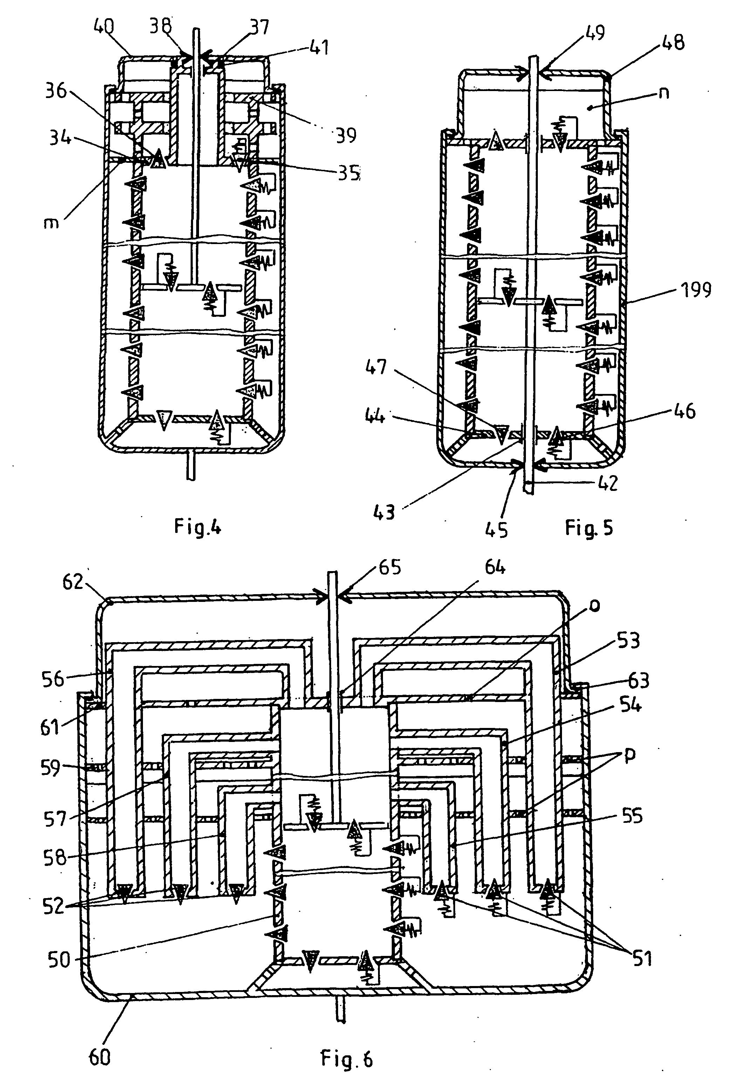

figure 4: the design of principle for the version with the rod guiding and sealing located in the superior block according to the fourth accomplishing example;
figure 5: the design for the version with the piston located to the centre of the rod, according to the fifth accomplishing example;
figure 6: the design for the version with the valves filled through siphoning, according to the sixth accomplishing example;

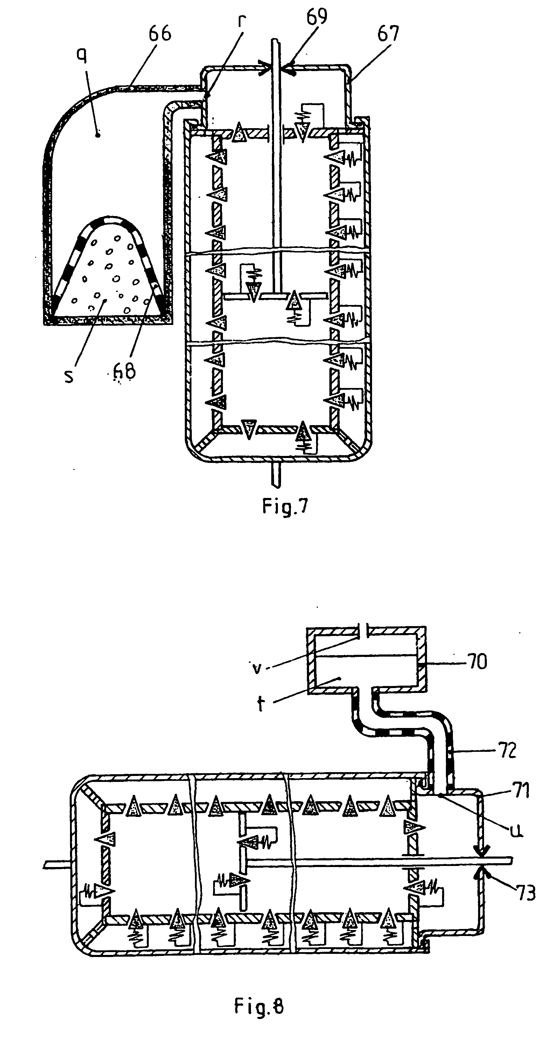

figure 7: the design for the version with lateral pressurized compensation, according to the seventh accomplishing example;
figure 8: the design for the version with external compensation, for working in any position, according to the eighth accomplishing example;

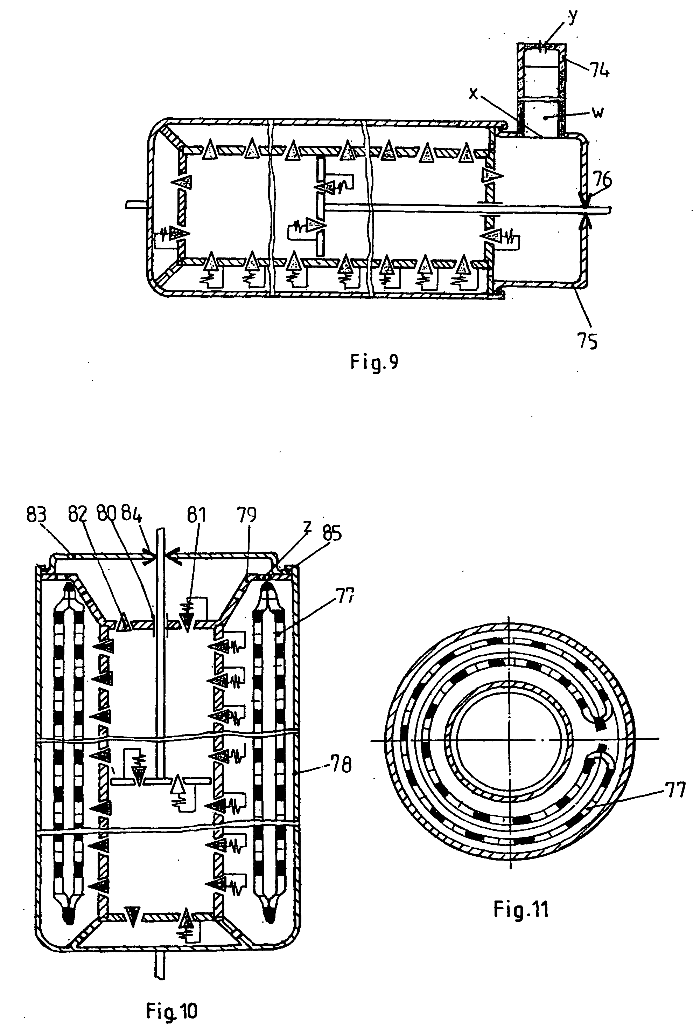

figure 9: the design for the version with lateral compensation, for working in semihorizontal position, according to the ninth accomplishing example;
figure 10: longitudinal section for the version with compensation through the pressurized bladder, according to the tenth accomplishing example;
figure 11: cross section for the version with compensation through the pressurized bladder, according to the tenth accomplishing example;

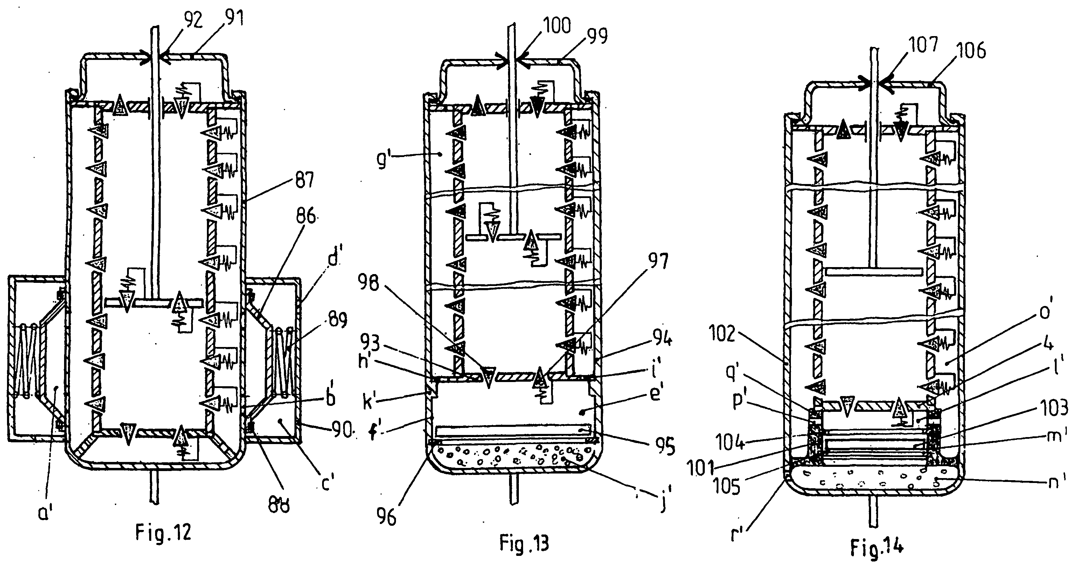

figure 12: the design for the version with compensation through exterior pleated tube , according to the eleventh accomplishing example;
figure 13: the design for the version with compensation through compensation chamber placed in the lower part of the tank cylinder, with the liquid separated from the gas through a floating piston-versionl,according to the twelfth accomplishing example;

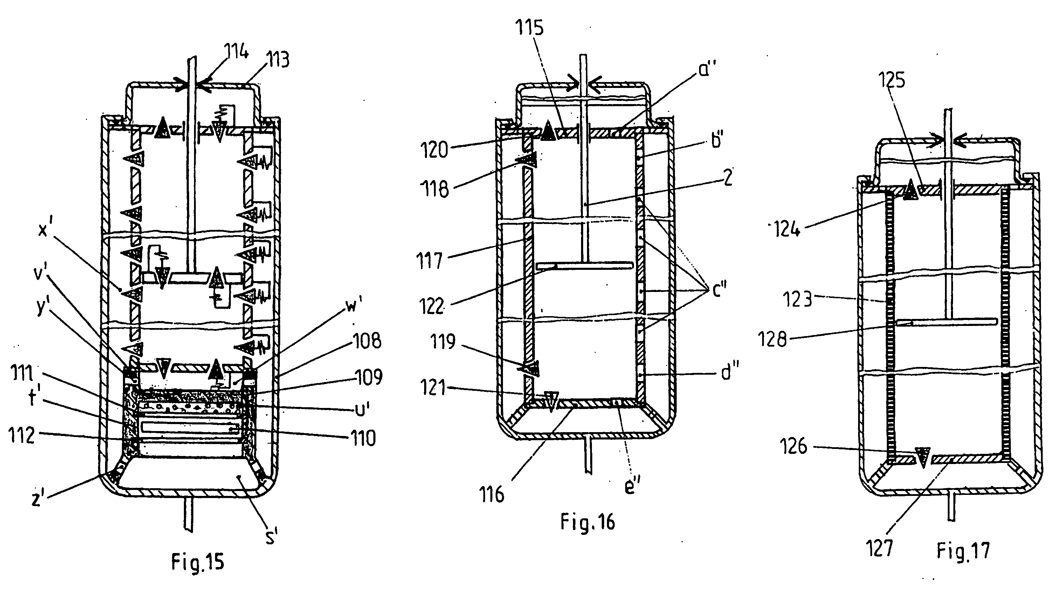

figure 14: the design for the version with compensation through compensation chamber placed in the lower part of the tank cylinder with the liquid separated from the gas through a floating piston - version 2, according to the thirteenth accomplishing example;
figure 15: the design for the version with compensation through the compensation chamber located in the lower part of the tank cylinder with the liquid separated from the gas through floating piston - version 3, according to the fourteenth accomplishing example;
figure 16: the design for the simple version using slots as controlling valves, according to the fifteenth accomplishing example;
figure 17: the design for the version with a poros inner cylinder, according to the sixteenth accomplishing example;

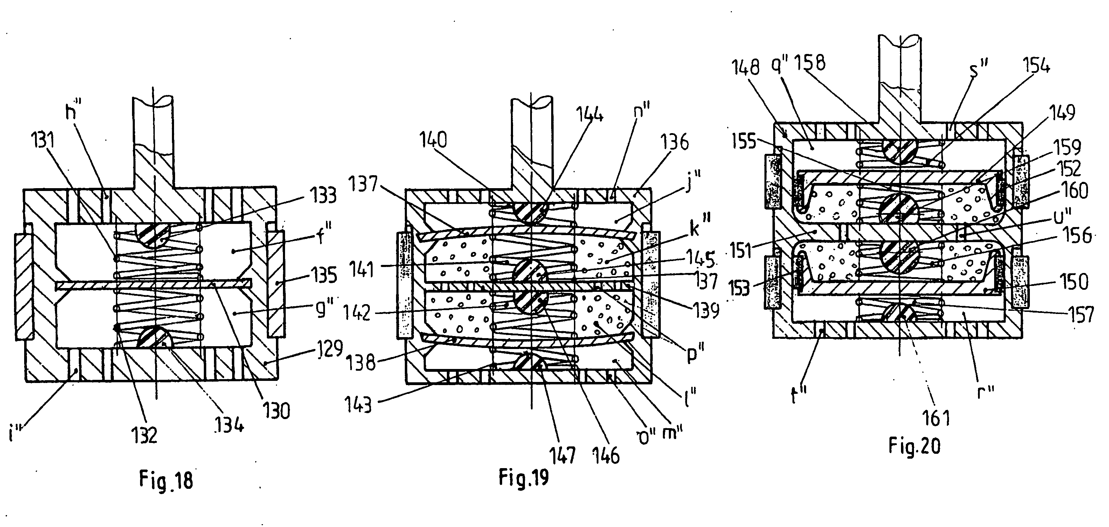

figure 18: the design for piston with membrane, according to the seventeenth accomplishing example;
figure 19: the design for piston with two membranes, according to the eighteenth accomplishing example;
figure 20: the design for piston with opposite little pistons, according to the nineteenth accomplishing example;

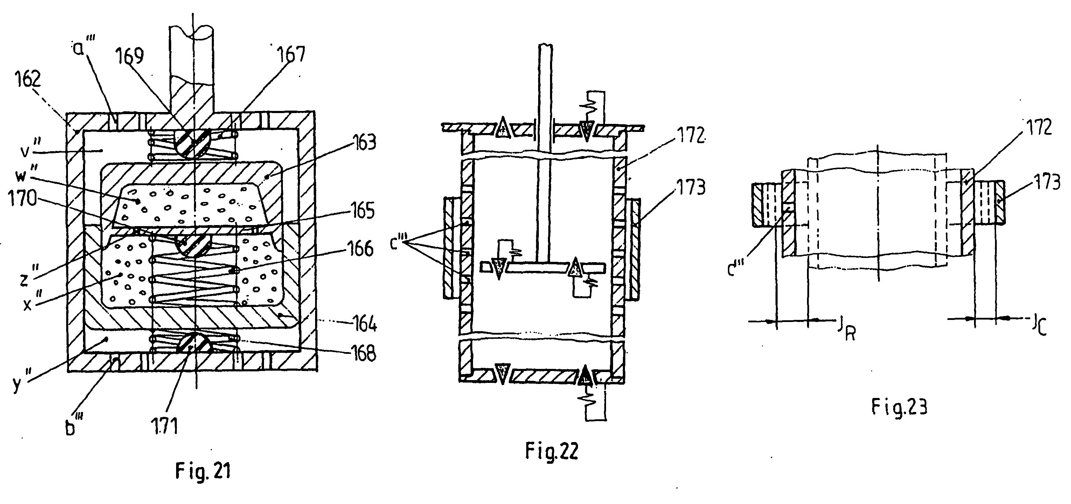

figure 21: the design for the piston with little piston in little piston, according to the twentieth accomplishing example;
figure 22: the design for the version of thermal compensation with ring, according to the twenty-first accomplishing example;
figure 23: the design showing the evolution of the temperature clearance for the version of thermal compensation with ring, according to the twenty-first accomplishing example;

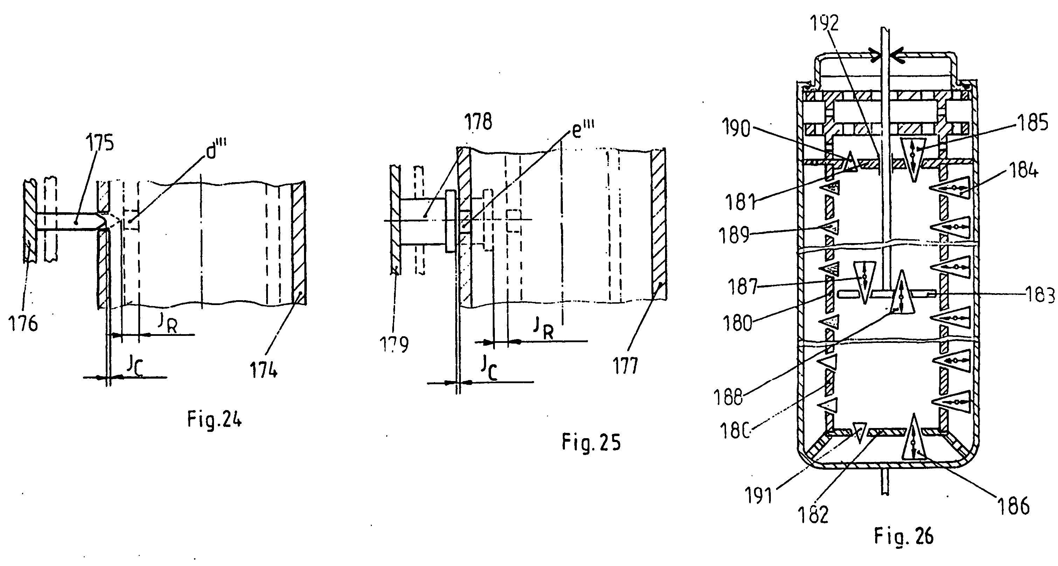

figure 24: the design for the version of thermal compensation with plunger, according to the twenty-second accomplishing example;
figure 25: the design for the version of thermal compensation with closer, according to the twenty-third accomplishing example;
figure 26: the design for total adjustment version, according to the twenty-fourth accomplishing example;

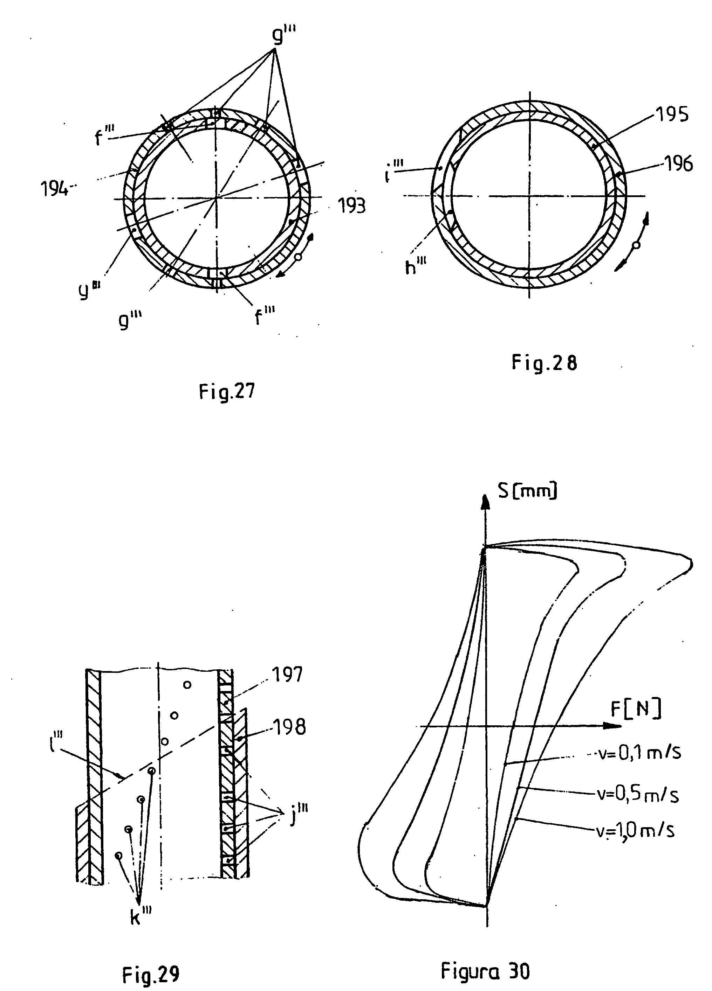

figure 27: the design for stepped adjustment version, according to the twenty-fifth accomplishing example;
figure 28: the design for continual adjustment, according to the twenty-sixth accomplishing example;
figure 29: the design for changing the adjustment with profiled ring, according to the twenty-seventh accomplishing example;
figure 30: damping diagram;

The automotive self-adjustable damper with a disipative self-correcting characteristic according to the first accomplishing example represents the principle design of the invention. A rod (1) drives off a piston (2) in an inner cylinder (3), closed at its inferior end by an inferior block (4) and at its superior end by a superior block (5) containing the rod guiding (6) too. In order to maintain the running liquid above the valves in a dinamic regime, a labyrinth system (7) is atached on superior part. All these elements are introduced in an outer cylinder (8) closed with a lid (9), the rod (1) passes through, sealed by a sealing element (10). The lid (9) is sealed as to the outer cylinder (8) through a sealing fitting (11). The fixing of the assembly made up by the inner cylinder (3), the lid (9), the inferior (4) and superior (5) blocks and labyrinth (7) is done axially between a proeminence (a) and a cupping (b) of the outer cylinder (8), and the lateral centring is assured by the same proeminence (a) and by a collar (c) of the superior block (5). The inferior block (4) contains an adjustment compression valve (12) and a filling rebound (13) one. The superior block (5) contains a checking rebound valve (14) and a filling compression valve (15). The piston (2) may contain or not a checking compression valve (16) and/or checking rebound valve (17). The inner cylinder (3) contains checking rebound valves (18) and checking compression valves (19) and may contain or not filling rebound valves (20) and filling compression valves (21) placed conveniently as position and number. The checking valves placed on the inner cylinder above the piston always work at the rebound stroke, and the check valves placed under the piston work on compression stroke, so that function of the position and the sense of the piston stroke, the same valve may have a check role on rebound or compression , that is one or several valves (18) may become (19) and the other way round. In the same way, the filling valves placed on the inner cylinder become active on rebound or compression, function of position and the sense of the piston running, thus one or several valves (20) becoming (21) or the other way round. The volume of the rod is compensated through the compensating chamber (d), placed above the valves, the circulation of the liquid between this and enclosure (e) between inner cylinder (3) and outer cylinder (8) and (f) between lower part of the outer cylinder (8) and inferior block (4), being accomplished through some passing holes (g) placed in the superior block (5), in the inner nose (h) respectivelly, of the outer cylinder (8) and (i) in labyrinths (7).

During the compression stroke due to the superpressure built up under the piston (2), the tilling rebound valves (20) in the inner cylinder (3) placed under the piston (2) and filling rebound valve (13) in the inferior block (4) close , the liquid having to pass through the checking compression valves (19) placed on the inner cylinder (3) under the piston (2) and when existing through the checking compression valve (12) in the inferior block (4) and (16) in piston (2). The more the piston approaches the inferior block (4) the more the number of the active checking compression valves (19) placed in the inner cylinder (3) is reduced and thus the damping force increases due to the increase of the speed of the liquid flowing through these valves. At the same time with the closing of the filling valves from under the piston (2), the filling compression valves (21) placed on the inner cylinder (3) above the piston (2) and/or the filling compression valve (15) in the superior block (5) open due to the pressure differences, assuring the filling with liquid of the working inside (j) above the piston preparing thus the rebound stroke. The dissipation characteristic function of the position of the piston changes as necessary by the corresponding placing and taring of the checking valves.

At the rebound stroke the overpressure built up above the piston (2) closes the filling compression valves (21) placed in the inner cylinder (3) and/or filling compression valve (15) placed in the superior block (5), forcing the liquid to pass through the checking rebound valves (18) in the inner (3) cylinder, placed above the piston (2) and if any through the checking rebound valve (14) in the superior block (5) and (17) from piston (2). As the piston approaches the superior block (5), the number of the checking rebound valves (18) active decreases so that the damping force increases. The depression from under the piston (2) opens the filling rebound valves (20) from under the piston placed on the inner (3) cylinder and the filling rebound valve (13) in the interior block (4), allowing the filling with liquid of the working area (k) on rebound stroke, preparing thus the compression stroke. Function of the location, the number and taring of the checking valves one obtains the required dissipation function as reported to the piston position.

The filling valves can vary in number function of the accomplished version being reduced to two pieces, one in the superior area (for preparing the rebound stroke) and one in the inferior area (for preparing the compression stroke), placed in the blocks or on the inner cylinder. These valves can be with plates, with segment or with ball. The checking (12) and (14) valves in the inferior block, superior respectively may be missing, so may the checking valves (16) and (17) in the piston. The number of the checking valves in the inner cylinder may be unlimited.

For the correct working of this version one must permanently assure a minimum level of liquid superior to the highest filling valve, thus the valves must be permanently flooded. The requirement is assured by the superior compensating chamber (d), edowed with the labyrints (7) system, for keeping the oil above the valves, in a dynamic regime.

For a better working one may produce a low pressurization, for an upward force high pressurization and in the case of using as a balancing unit a high pressurization.

The automotive self-adjustable damper with a dissipative self-correcting characteristic according to a second accomplishing example has its inner (22) cylinder equiped only with checking rebound valves (23) and checking compression valves (24) and eventually at ends with a filling compression valve (25) and a filling rebound valves (26). The superior block (27) can contain or not a filling compression valve (28). The inferior block (29) can contain or not a filling rebound valve (30). The filling of the inner cylinder to rebound stroke is achieved through one or both filling valves located in the inferior area (26) and/or (30), function of the solution adopted by the manufacturer. The filling of the inner cylinder to compression stroke is achieved through one or both fillig valves located in the superior area (25) and/or (28), function of the desired version. The piston may contain or not the checking valves (16) and (17). To allow the circulation of the oil, the superior block (27) has some holes (1).

The automotive self-adjustable damper with a dissipative self-correcting characteristic according to a third accomplishing example has the closing lid (31) of the outer cylinder equipped both with the sealing element (32) and with a guiding element (33) with a view of a better sealing and overtaking the lateral forces.

The automotive self-adjustable damper with a dissipative self-correcting characteristic according to a fourth accomplishing example has the superior block (34) equipped both with checking rebound valve (35), filling compression valve (36), a guiding (37) and with the sealing element (38). To allow the circulation of the oil, the superior block (34) is endowed with some holes (m). The labyrinth system (39) is corresponding configurated and may be fixed on the superior block (34) or on the outer cylinder. The lid (40) for closing the outer cylinder is sealed as to the superior block through an oil sealing O- ring (41).

The automotive self-adjustable damper with a dissipative self-correcting characteristic according to a fifth accomplishing example has the rod (42) longer in the inferior part too, this being guided also in a guiding system (43) contained in the inferior block (44) and sealed lowerly through a sealing element (45), placed in the outer cylinder (199). The interior block (44) may contain or not checking compression valve (46) and/or filling rebound valve (47). The version has the advantage of a superior guiding and at equal widths of the rod on either side of the piston, the compensation of the rod volume is not necessary. So the superior clothing lid (48) is specific, the compensation chamber (n) being smaller. The sealing of the rod is achived through a sealing element (49) placed on the lid (48).

The automotive self-adjustable damper with a dissipative self-correcting characteristic according to a sixth accomplishing example has its inner cylinder (50) with checking valves (51) and filling valves (52) in the superior area, lowered through some tubes (53), (54), (55) and respectively (56), (57), (58) under the level of the liquid, which is maintained in a dynamic regime in the inferior part through some allayers (59) fixed on the inner cylinder (50) or on the outer cylinder (60). The outer cylinder (60), the superior block (61) contains a guidance (64) too and the lid (62) contains a sealing element (65). The circulation of the liquid thrrough the outer (60) cylinder is done through some holes (o) in the superior block (61) and through some holes (p) in the allayers (59).

The automotive self-adjustable damper with a dissipative self-correcting characteristic according to a seventh accomplishing example assures the compensation of the volume of the rod through the liquid in the inside enclosure (q) of a lateral chamber (66), fixed on the closing lid (67) whose interior communicates through a hole (r). To compression the volume of the outgoing rod is compensated by the liquid enclosure (g) pushed due to the expansion of the inside gas (s). The lid (67) is equipped with an element (69) for the rod sliding sealing. The version allows the working in any position because the plated tub (68) does not allow the penetration of the gas into the working liquid. The gas pressurization may be low, medium, or high, function of the desired effect.

The automotive self-adjustable damper with a dissipative self-correcting characteristic according to a eighth accomplishing example has the compensation of the rod volume assured by the liquid to be found enclosure (t) an exterior compensation chamber (70) which is connected to a clothing lid (71) through a flexible pipe (72) with which it communicates through a hole (u). The lid (71) assures the sliding sealing of the rod through a sealing element (73). Unlike the seventh example, with this example the compensation is achieved at the atmospheric pressure. In order to reduce the cavitation or assuring the upward force one may use the pressurized version, case in which the hole (v) is closed after the introduction of a compressed gas inside (t) in the exterior chamber (70).

The automotive self-adjustable damper with a dissipative self-correcting characteristic according to the ninth accomplishing axample assures the compensation of the rod volume through the liquid inside (w) of a lateral chamber (74), fixed on a lid (75) for closing the outer cylinder (8) it comunicates with through a hole (x). The sealing of the rod (l) is achieved through an element (76) on the closing lid (75). The compensation is done at the atmospheric pressure or presurized through a compressed gas introduced inside (w) chamber (74), situation imposing the closing of the hole (y) for communication with the atmosphere.

The automotive self-adjustable damper with a dissipative self-correcting characteristic according to the tenth accomplishing example assures the compensation of the rod volume with pressurized bladder (77)- U.S. Patent ( December 24, 1985. 4.560.042) placed between the inner cylinder (3) and the outer cylinder (78). In its superior part the inner cylinder (3) is closed by a superior block (79) containing a guiding (80), endowed with some communication orifices (z), for allowing the working liquid cirrculation and which can have or not a checking rebound valve (81) and/or a filling compression valve (82). The assembly is closed by a lid (83) containing an element (84) for the sliding sealing of the rod (l) and which is sealed against the outer cylinder (78) through an element (85).

The automotive self-adjustable damper with a dissipative self-correcting characteristic according to the eleventh accomplishing example assures the compensation of the rod volume through the liquid contained in an enclosure (a') between an exterior pleated tube (86) and a cylinder (87) it is connected to through some constricted clamping rings (88). The communication between the enclosure (a') and the inside of the outer cylinder (87) is done through some holes (b'). The pressurization level is controlled through the rigidity of the pleated tube (86) and by using some springs (89) and/or the pressure of the gas in an enclosure (c') delimited by a protection housing (90), the pleated tube (86) and outer cylinder (87). When no pressurized gas is used the inside (c') communicates with the atmosphere through one or several holes (d') on the housing (90). The assembly is closed by a lid (91), equipped with a fitting (92) assuring the rod sealing.

The automotive self-adjustable damper with a dissipative self-correcting characteristic according to the twelfth accomplishing example assures the compensation of the rod volume with the help of the liquid contained in a room (e') formed between an inferior block (93), the inferior lateral side of an outer cylinder (94) and a floating piston (95) sliding on the specially processed surface (f') in the outer cylinder (94). The chamber (e') communicates with a lateral inside (g') formed between the inner cylinder (3) and the outer cylinder (94) through some holes (h') in the (i') nose of the inferior block (91) playing a centring and fixing part. The compensation is done due to the force created by the floating piston (95) as a result of the pressure of the gas contained in a separating chamber (j') formed between the lower part of the outer cylinder (94) and the floating piston (95). The outer cylinder (94) is endowed with a collar (k') for the inferior fixing of the inferior (93) block. The stroke of the floating piston (95) is limited upward by the some collar (k'), and downward by a stopper (96). The inferior block (93) may have or not a checking compression valve (97) and/or a filling rebound valve (98). The assembly is closed by a lid (99), endowed with a fitting (100) assuring the rod sealing.

The automotive self-adjustable damper with a dissipative self-correcting characteristic according to the thirteenth accomplishing example assures the compensation of the rod volume throught the liquid in a compensation chamber (l') formed between the inferior block (4), a solidary support (101) with an outer cylinder (102) and a floating piston (103), sliding inside the support (101), along a processed area (m'). Between the piston (103), the support (101) and the inferior part of the outer cylinder (102) there is an enclosure (n') containing pressurized gas. between the inner cylinder (3) and the outer cylinder (102) there is a chamber (o') communicating with the compensation (l') chamber through some holes (p') in the support (101). The compensation is done due to the pressure of the gas in the enclosure (n') which forces the passing of the liquid in the compensation (l') chamber through the floating piston (103) into the lateral (o') chamber. In order not to allow the obturation of the communicating (p') hole and the mixing of the gas with the working liquid the stroke of the floating piston (103) is limited through a superior stopper (104) and an inferior (105) one. The support (101) is endowed with an area (q'), for centring and fixing the inferior block (4). The chamber (n') containing pressurized gas can communicate with an equipment for controlling the pressure through a hole (r') which is normally closed. The assembly is closed with a lid (106), equipped with a fitting (107) assuring the rod sealing.

The automotive self-adjustable damper with a dissipative self-correcting characteristic according to the fourteenth accomplishing example assures the compensation of the rod volume through the liquid in a chamber (s'), in the lower part of an outer cylinder (108) and formed between this, the solidary support (109) in the lower part of the outer cylinder (108) and the floating piston (110) sliding in the support (109) in an area (t') processed with this view. The support (109) has in its central part a chamber (u') containing a compressed gas acting on the piston (110) and in its superior part it has a processed area (v') for assuring the fixing and centring of the lower block (4). Between the inferior block (4) and the support (109) there is a chamber (w') communicating with the enclosure (x'), formed between the inner cylinder (3) and the outer cylinder (108) through some holes (y'). The chamber (x') communicates with chamber (s') through some holes (z'). The compensation is achieved due to the pressing of the pressurized gas in chamber (u') on the piston (110) which in its turn acts on the liquid in chamber (s'). The stroke of the floating piston (110) is limited by a superior stopper (111) and an inferior one (112) for not allowing the mixing of the gas with the liquid. The assembly is closed with a lid (113), equipped with a fitting (114) assuring the rod sealing.

The automotive self-adjustable damper with a dissipative self-correcting characteristic according to the fifteenth accomplishing example has a superior block (115) and inferior block (116) and an inner cylinder (117) with check valveses made up of some calibrated (a"), (b"), (c"), (d") and (e") holes/ slots respectively, the number of lioles/slots (b"), (c"), (d") being unlimited. These holes/slots can be placed both in the inner cylinder (117) and in one or both superior (115) and/or inferior (116) blocks. The filling of the inner cylinder (117) is done through some filling (118)/ (119) valves located in the superior/ inferior area of the cylinder (117) and/or through a valve (120) placed in the superior block (115) and/or valve (121) placed in the inferior block (116). Two filling valves are enough, one for the superior part and one for inferior one , when function of solution they can be placed in the inner cylinder (117) or in the superior (115) or inferior (116) block. The drawing of the liquid is done by a piston (122) nonequipped with valves.

The automotive self-adjustable damper with a dissipative self-correcting characteristic according to the sixteenth accomplishing example has an inner cylinder (123) made from a poros material with a controlled capilarity representing thus a simple and cheap solution. The filling is assured by a filling valve (124) placed in a superior block (125) and one (126) placed in an inferior block (127). The liquid is drawn by a piston (128) nonequipped with valves.

The automotive self-adjustable damper with a dissipative self-correcting characteristic according to the seventeenth accomplishing example has a working piston (129) endowed with internal membrane (130) separating the inside of the piston (129) in two enclosures (f"), (g") comunicating with the interior of the inner cylinder through some holes (h"), (i") in the superior/ inferior side of the piston (129). The membrane (130) changes its form due to the pressure differences on the two sides of the liquid coming from the working cylinder assuring the damping characteristic uniformization. The membrane may be strengthened or not with some springs (131) and (132). The hydraulic shock damping degree is controlled through the membrane (130) rigidity and of the springs (131), (132) as well as through the holes (h"), (i") dimensions. The membrane stroke is limited by some bumpers (133), (134) placed on the interior sides of the piston (129). In order to reduce the hydraulic loss the piston may be equipped with a segment (134) made from an organic, metalic, or metal-ceramic material.

The automotive self-adjustable damper with a dissipative self-correcting characteristic according to the eighteenth accomplishing example has a working piston (136) endowed inside with two elastic membranes (137), (138) on either side of a diaphragm (139) placed half way the distance of the piston (136) and which separate the inside of the piston in four enclosures (j"), (k"), (l"), (m"). The enclosures (j"), (m") communicate with the inside of the inner cylinder through some holes (n"), (o") and the enclosures (k"), (l") may or may not communicate between them through some holes (p") in the diaphragm (139). The membranes (137), (138) change their form at the pressure variations in the working cylinder exercised by the liquid coming into the piston through the communication holes (n"), (o") in the superior/inferior wall, assuring thus the damping characteristic uniformization. The membranes may be strengthened or not with some springs (140), (141), (142), (143). A pressurized gas may or not be introduced in the enclosures (k"), (l"). The hydraulic shocks absorption degree is controlled through the rigidity of the membranes (137), (138), springs (140), (141), (142), (143), the pressurization degree of the gas in the enclosures between the membranes and the sizes of the calibrated holes. The strokes of the membranes are limited through some bumpers (144), (145), (146), (147).

The automotive self-adjustable damper with a dissipative self-correcting characteristic according to the nineteenth accomplishing example has a working piston (148), endowed inside with two little pistons (149), (150), equal or not in diameter, running in two rooms (q"), (r"), separated by a diaphragm (151). The little pistons (149),(150), may be equipped or not with some segments (152),(153) and a compressed gas may be or not introduced behind them. The running of the little pistons (149),(150), may be controlled by some springs (154),(155),(156),(157) and the stroke limited by some bumpers (158),(159),(160),(161). The (q") enclosure communicates with the inner cylinder through some holes (s") and the enclosure (r") through some holes (t") so the pressure variations in the innerr cylinder determine the movement of the little pistons (149),(150), assuring the damping characteristic uniformization. The hydraulic shocks damping degree is controlled both through the calibration holes (s"),(t") on the piston (148) and through the rigidity of the springs (154),(155),(156),(157) or through the pressure of the gas in chambers (q"),(r"), behind the little pistons and if there are through some holes (u") in the diaphragm (151), assuring the communication between the chambers (q"), (r"), behind the pistons. The solution can be accomplished in the version without springs or a pressurized gas.

The automotive self-adjustable damper with a dissipative self-correcting characteristic according to the twentieth accomplishing example has a working piston (162), endowed with two little pistons (163),(164), the first inside the other one. The little piston (163) is endowed or not with a diaphragm (165) on which a spring (166) may lean, placed at the other end at the bottom of the greater piston (164). The movement of the little pistons (163),(164) is controlled through some springs (167),(168), placed between these and the inner sides of the piston (162). The little pistons (163),(164) and the inner sides of the piston (162) form some enclosures (v"), (w"), (x"), (y"). The enclosures (w"),(x") may communicate between them through some holes (z"). The enclosure (v") communicates with the inner cyliner through some holes (a''') and the enclosure (y") through some holes (b'''). We may or not introduce a pressurized gas in the enclosures (w"), (x"). The two little pistons move at the variation of pressure in the inner cyliner under the action of the liquid penetrating through the holes (a'''), (b''') in the superior/inferior side of the piston (162) assuring the damping characteristic uniformization. The damping degrees are checked both through the calibrated holes (a'''), (b'''), (z") and through the spring rigidity (158), (159), (160) placed between the pistons and the inner sides of the piston (162) as well as through the pressure of the gas in chambers (w"), (x") inside the little pistons. The little pistons strokes can be checked through some bumpers (169),(170), (171). The solution can be also achieved in the version without springs or without compressed gas.

The automotive self-adjustable damper with a dissipative self-correcting characteristic according to the twenty-first accomplishing example has an inner cylinder (172), with one or several calibrated holes (c''') obturated with a ring/segment (173) made from a material having a thermal extension coefficient less then that of the material of the inner cylinder, determining the decrease of the distance between cylinders when the thermic regime increases causing the increase of the damping forces at warmth. The dotted line presents the state at cold and the continuous line presents the situation at wannth. In the diagram J_{c} represents the clearance at warmth and J_{R} the clearance at cold.

The automotive self-adjustable damper with a dissipative self-correcting characteristic according to the twenty-second accomplishing example has in its inner cylinder (174) one or several calibrated holes (d'''), obturated with one or several sharp plungers (175) made from a material having a thermal extension coefficient greater than of the material the inner cylinder (174) is made from and fixed on the outer cylinder (176) which determines the penetration of the plunger/s (175) in the calibrated hole (d''') when increasing the temperature, position determining in its turn the incease of the damping forces. The state of cold is presented with a dotted line in the diagram and the state at warmth with a continuous one. J_{C} represents the clearance at warmth and J_{R} the clearance at cold.

The automotive self-adjustable damper with a dissipative self-correcting characteristic according to the twenty-third accomplishing example has one or more calibrated holes (c''') in the inner cylinder (177), obturated with one or several closers (178) made from a material with a thermal expansion coefficient greater to the one of the material the inner cylinder (177) is made from and fixed on the outer cylinder (179) which determines the closer/s (178) to obturate stronger the hole/s calibrated when the temperature increases , situation determining in its turn the increase of the damping forces. A dotted line represents the situation at cold and a continuous one the situation at warmth. J_{C} represents the clearance at warmth and J_{R} the clearance at cold.

The automotive self-adjustable damper with a dissipative self-correcting characteristic according to the twenty-fourth accomplishing example has a inner cylinder (180), a superior (181) block , an inferior block (182) and a piston (183), equipped with adjustable valves (184), (185), (186), (187), (188) having the possibility of changing the damping characteristic in real time. The control of the valve adjustment is done through the control of the relative position of the obturation elements of the discharge valves of the liquid or through the control of the forces of pressing the valve plater or through the control of the sizes of the calibrated holes, being able to be accomplished mechanically, hydraulically, pneumatically, electrically or electromagnetically, continuously, discretely or in steps. The inner cylinder (180), the superior block (181), the inferior block (182), contain filling valves (189), (190), (191). The filling valves can be reduced to two , one in the superior part for compression and one in the inferior part for rebound. The checking valves (185) placed in the superior block (181) and / or (186) placed in the inferior block may be missing. The superior block (181) contains a guidance (192) too.

The automotive self-adjustable damper with a dissipative self-correcting characteristic according to the twenty-fifth accomplishing example has an inner cylinder (193), with one or several holes calibrated (f'''), obturated as wanted by different calibre holes (g''') in a concentric cylinder (194) with the inner cylinder and having the possibility of rotating as against it. Function of the relative position of the two cilinders the working fluid may flow through one or several holes of different sizes achieving thus the adjustment in stages of the damping characteristic.

The automotive self-adjustable damper with a dissipative self-correcting characteristic according to the twenty-sixth accomplishing example has on the inner cylinder (195), one or several canals (h''') obturated as wanted more or less by the concentring ring (196) with one or several canals (i'''). Function of the relative position of the two cylinders the working fluid may flow through a slot with a smaller or bigger surface assuring thus the dissipation characteristic wanted.

The automotive self-adjustable damper with a dissipative self-correcting characteristic according to the twenty-seventh accomplishing example has some holes (j'''), (k''') on the inner cylinder (197), which are obturated as wished by the edge of a concentric cylinder (198) conveniently profiled (l'''). The moving of the ring (198) as to the cylinder (197) eliberates a different number of holes determining the modification of the damping characteristic.

## Claims

1. Automotive self-adjustable shock absorber with self-correcting dissipative characteristic comprising:
an inner cylinder (3) forming a working chamber, the inner cylinder (3) being provided along the length thereof with a plurality of first rebound check valves (18) and first compression check valves (19);
a piston (2) provided with a second rebound check valve (17) and a second compression check valve (16) and slidably mounted within the working chamber and separating the working chamber into a compression compartment (k) and a rebound compartment (j) the volumes of which vary in accordance with the position of the piston (2) in the working chamber;
a piston rod (1) connected to the piston (2) and extending from the end of the working chamber adjacent the rebound chamber;
an outer cylinder (8) disposed around the inner cylinder (3), the outer cylinder (8) forming a reservoir chamber between the inner cylinder (3) and the outer cylinder (8);
an inner cylinder head (4) closing the end of the working chamber adjacent the compression compartment, and provided with a first filling valve (13) for filling on rebound;
an inner cylinder head (5) closing the end of the working chamber adjacent the rebound compartment, the inner cylinder head (5) being provided with an annular piston rod guide (6) or a central aperture (6) being sized to slidably engage around the piston rod (2), and with a collar (c) rigid with the inner wall of outer cylinder (8);
an outer lid (9) provided with a seal member (10) having a center aperture sized to slidably engage around the piston rod (1);
**characterized in that**
a labyrinth system (7) formed by some passages (i) is positioned between the inner cylinder head (5) and the outer lid (9), the compartment between the inner cylinder head (5), the outer lid (9),the piston rod(2) and the outer cylinder (8) forming a balance chamber (d);
a fluid fills the working chamber and at least partially fills the balance chamber (d); the inner cylinder head (5) is provided with a second filling valve (15) for filling on compression, and with some oil passages (g);
a plurality of third filling valves (20) is provided on the lower end of the inner cylinder (3) for filling on rebound; and
a plurality of fourth filling valves (21) is provided on the upper end of the inner cylinder (3) for filling on compression.

2. Automotive self-adjustable shock absorber with self-correcting dissipative characteristic according to claim 1, **characterized by** a third compression check valve (12) placed on the inner cylinder bottom (4).

3. Automotive self-adjustable shock absorber with self-correcting dissipative characteristic according to claim 1 or 2, **characterized in that**
a second piston rod (42) extends from the underside of the piston (2);
the inner cylinder bottom (44) is provided with an annular piston rod guide (43) sized to slidably engage around the second piston rod (42);
the end bottom of an outer cylinder (199) is provided with a seal member (45) slidably engaging around the second piston rod (42).

4. Automotive self-adjustable shock absorber with self-correcting dissipative characteristic according to one of the claims 1 to 3, **characterized in that**
an annular pleated tube (86) concentric with an outer cylinder (87) is fixed on the outer cylinder (87) by two constricted clamping rings (88);
a housing (90) rigid with the outer cylinder (87) is disposed around the annular pleated tube (86), the housing (90) forming together with the annular pleated tube (86) a chamber (c') filled with pressurized gas introduced through a hole (d') formed in the housing (90), the hole (d') being closed after filling;
the outer cylinder (87) contains one or more holes (b') for oil passing.

5. Automotive self-adjustable shock absorber with self-correcting dissipative characteristic according to one of the claims 1 to 4, **characterized in that**
an outer cylinder (94) has an inferior extension in which a floating piston (95) forms an upper enclosure (e') for balancing the rod volume, and a lower enclosure (j') placed at the lower end of the outer cylinder (94) and containing compressed gas;
the outer cylinder (94) is provided at the lower end with a collar (k') rigid with the inner cylinder bottom (93) for upper security limitation of the floating piston (95) stroke, and a stopper (96) for lower security limitation.

6. Automotive self-adjustable shock absorber with self-correcting dissipative characteristic according to one of the claims 1 to 5, **characterized in that**
in the inner cylinder (117) metering holes or slots (b"), (c"), (d") are provided, the number thereof corresponding to the desired damping characteristic.

7. Automotive self-adjustable shock absorber with self-correcting dissipative characteristic according to one of the claims 1 to 6, **characterized in that**
all or different sections of an inner cylinder (123) are made from a porous material with a controlled capillarity.

8. Automotive self-adjustable shock absorber with self-correcting dissipative characteristic according to one of the claims 1 to 7, **characterized in that**
at least one check valve (184) placed on the inner cylinder (180) is a adjustable damping valve, with the possibility of modifying the dissipation characteristic slowly, or in real time, the control of the adjustable valve being permanently, or discretely, or stepwise, by controlling the relative position of obturating elements, or by controlling liquid discharging holes, or by controlling the pressing forces of valve plates, or by controlling the sizes of the metering holes or slots, being achieved mechanically, hydraulically, pneumatically, electrically, or electromagnetically, or by a combination of them, allowing the achieving of a contollable or a semi-active shock absorber.

9. Automotive self-adjustable shock absorber with self-correcting dissipative characteristic according to claims 1 to 8, **characterized in that**
the outer lid (31) is provided with a second annular piston rod guide (33) and a seal member for a better taking up of the lateral strains.

10. Automotive self-adjustable shock absorber with self-correcting dissipative characteristic according to one of the claims 1 to 9, **characterized in that**
the inner cylinder head (34) is equipped with an annular piston rod guide (37), with a seal member (38) and with some holes or openings (m) for oil passing;
and
an outer lid (40) is sealed to the inner cylinder head (34) by an oil sealing O-ring (41).

11. Automotive self-adjustable shock absorber with self-correcting dissipative characteristic according to one of the claims 1 to 10, **characterized in that**
inside the piston (129) an elastic membrane (130) is provided forming two enclosures (f"), (g") with the internal walls of the piston (129);
the walls of the piston (129) are provided with metering holes (h"), (i");
between the membrane (130) and the internal walls of the piston (129) two springs (131), (132) are disposed, the stroke of the membrane (130) being limited by stoppers (133), (134) supported on the internal walls of the piston (129).

12. Automotive self-adjustable shock absorber with self-correcting dissipative characteristic according to one of the claims 1 to 10, **characterized in that**
inside the piston (136) two membranes (137), (138) are placed on either side of a central diaphragm (139) for forming four chambers (j"), (k"), (l"), (m") with the inner walls of the piston (136);
the chambers (k"), (l") on either side of the diaphragm (139) contain a pressurized gas and communicate with each other through some metering holes (p") placed in the diaphragm (139);
the chambers (j"), (m") provided on the superior and inferior part of the piston (136) communicate with working chamber through some metering holes (n"), (o") placed in the opposite surfaces of the piston (136);
between the opposite surfaces of the piston (136) and the elastic membranes (137), (138) springs (140), (141), (142), (143) are arranged;
the strokes of the elastic membranes (137), (138) are limited by bumpers (144), (147) arranged on the inner sides of the piston (136).

13. Automotive self-adjustable shock absorber with self-correcting dissipative characteristic according to one of the claims 1 to 10, **characterized in that**
inside the piston (148) two working chambers (q"), (r") of equal or unequal diameters are provided, the working chambers (q"), (r") being separated by a diaphragm (151) placed in the central area of the piston (148);
the diaphragm (151) contains some communication holes or slots (u");
two little pistons (149), (150) equipped with segments (152), (153) are slidably mounted within the working chambers (g"), (r");
behind the little pistons (149), (150) pressurized gas is introduced;
the opposite surfaces of the piston (148) are provided with slots (s"), (t");
between the little pistons (149), (150) and the inner sides of the piston (148) four springs (154), (155), (156), (157) are inserted; and
two bumpers (158), (161) are placed on the inner sides of the piston (148).

14. Automotive self-adjustable shock absorber with self-correcting dissipative characteristic according to one of the claims 1 to 10, **characterized in that**
the first piston (162) comprises a working chamber in which a second piston (164) is slidably mounted;
the second piston (164) comprises a working chamber (x"), in which a third piston (163) is slidably mounted;
the third piston (163) contains a diaphragm (165) with metering holes (z"), the diaphragm (165) defining an enclosure (w") with the bottom of the third piston (163);
the second and third pistons (163), (164) separate the working chamber of the first piston (162) into a rebound compartment (v") and a compression compartment (y");
some metering holes or slots (a'''), (b''') are machined in opposite walls of the piston (162);
between the diaphragm (165) and the second piston (163) a spring (166) is inserted and a pressurized gas is introduced, and a bumper (170) is provided on the diaphragm (165);
between the surfaces of the second and third pistons (163), (164) and the opposite inner sides of the piston (162) springs (167), (168) are arranged;
on the opposite inner surfaces of the first piston (162) bumpers (169), (171) are disposed;
the little pistons (163), (164) are provided with segments (153).

15. Automotive self-adjustable shock absorber with self-correcting dissipative characteristic according to claim 14, **characterized in that**
springs (167, 168) are arranged between the third piston (164) and inner opposite surfaces of the piston (164).

16. Automotive self-adjustable shock absorber with self-correcting dissipative characteristic according to one of the claims 1 to 15, **characterized in that**
the inner cylinder (172) is provided at a desired level with one or more metering holes or slots (c'''), and around the inner cylinder (172) at the level of the holes (c''') at least one ring (173) is located made from a material having a thermal expansion coefficient smaller than the one of the material the inner cylinder (172) is made from.

17. Automotive self-adjustable shock absorber with self-correcting dissipative characteristic according to one of the claims 1 to 16, **characterized in that**
the inner cylinder (174, 177) is provided at a desired level with one or more metering holes or slots (d'''), or (e''') controlled by plungers or closers of diverse shapes (175), (178), fixed on an outer cylinder (176), or (179), and made from materials with thermal expansion coefficients greater than the material the inner cylinder (174) or (177) is made from.

18. Automotive self-adjustable shock absorber with self-correcting dissipative characteristic according to one of the claims 1 to 17, **characterized in that**
the inner cylinder (193) is provided at a desired level with one or more metering holes or slots (f'''), in the area of which an annular body (194) encircling the inner cylinder (193) is located;
the annular body (194) is provided with one or more holes or slots (g''') placed at the same level like the holes or slots (f''');
rotation step by step of the annular body (194) relative to the inner cylinder (193) allows superimposing by steps of holes or slots (g''') with the holes or slots (f''') in desired combination.

19. Automotive self-adjustable shock absorber with self-correcting dissipative characteristic according to one of the claims 1 to 18, **characterized in that**
the inner cylinder (195) is provided at a desired level with one or more metering holes or slots (h''') in the area of which an annular body (196) encircling the inner cylinder (195) is located;
the annular body (196) is provided with one or more holes or slots (i''') placed at the same level like the holes or slots (h''');
continuous rotation of the annular body (196) relative to the inner cylinder (195) allows continuous superimposing of holes or slots (h''') with the holes or slots (i''') in desired percent.

20. Automotive self-adjustable shock absorber with self-correcting dissipative characteristic according to claims 1 to 19, **characterized in that**
the inner cylinder (197) contains at different levels one or more metering holes or slots (j'''),(k''') in the area of which an annular body (198) encircling the inner cylinder (197) is located;
the annular body (198) has one or both edges (l''') shaped according to a convenient profile;
rotation of the exterior ring (198) relative to the inner cylinder (197) assure desired obturing of one or more holes or slots (j'''),(k''').

## Patentansprüche

1. Selbstregelnder Stossdämpfer für Fahrzeuge, mit selbstkorrigierender Dissipationscharakteristik beinhaltend:
ein Innenrohr (3) bildend einen Arbeitsraum, das Innenrohr (3) ist ausgestattet auf seiner Länge mit mehrere erste Zugstufeventile (18) und erste Druckstufeventile (19);
einen Kolben (2) ausgestattet mit einem zweiten Zugstufeventil (17) und einem zweiten Druckstufeventil (16) und gleitend montiert innerhalb des Arbeitsraumes und welcher den Arbeitsraum in einem Druckraum (k) und einem Zugraum (j) deren Volumen in Abhängigkeit von der Position des Kolbens (2) in dem Arbeitsraum ist trennt;
eine Kolbenstange (1) befestigt an dem Kolben (2) und ausgehend vom Ende des Arbeitsraumes, anliegend dem Zugraum;
ein Aussenrohr (8) ausgerichtet ringsum dem Innenrohr (3), das Aussenrohr (8) bildend einen Reserveraum zwischen dem Innenrohr (3) und dem Aussenrohr (8);
ein Bodenstück (4) schliessend das Ende des Arbeitsraumes anliegend an dem Druckraum, und ausgestattet mit einem ersten Füllungsventil (13) für Füllung während der Zugstufe;
einen oberen Schliesskörper (5) schliessend das Ende des Arbeitsraumes anliegend an dem Zugraum, der Schliesskörper (5) ist ausgestattet mit einer ringformigen Kolbenstangenführung (6) oder mit einer kreisförmigen mittigen Oeffnung (6) dimensioniert für Gleitsitz mit der Kolbenstange (2), und mit einem Kragen (c) solidarisch mit der Innenwand des Aussenrohres (8);
eine Aussenschliesskappe (9) ausgestattet mit einem Abdichtelement (10) mit einer mittigen Oeffnung dimensioniert für Gleitsitz mit der Kolbenstange (1);
charakterisiert durch
ein Labyrinthsystem (7) bestehend aus mehrere Durchgänge zwischen dem Schliesskörper (5) und der Aussenschliesskappe (9), der Raum zwischen dem Schliesskörper (5), der Aussenschliesskappe (9), die Kolbenstange (2) und dem Aussenrohr(8) bildend einen Ausgleichraum (d);
eine Flussigkeit füllt den Arbeitsraum und wenigstens teilweise den Ausgleichraum (d);
der Schliesskörper (5) ist ausgestattet mit einem zweiten Füllungsventil (15) für Füllung während der Druckstufe, und mit mehrere Durchgänge (g);
eine Pluralität dritter Füllungventile (20) ist angebracht an das untere Ende des Innenrohres (3) für die Füllung während der Zugstufe; und
eine Pluralität vom vierten Füllungventil (21) ist angebracht an das obere Ende des Innenrohres (3) für Füllung während der Druckstufe.

2. Selbstregelnder Stossdämpfer für Fahrzeuge, mit selbstkorrigierender Dissipationscharakteristik entsprechend der Patentanspruch 1, charakterisiert durch
das dritte Einstellventil (12) für die Druckstufe, angebracht auf dem Bodenstück des Innenrohres (4).

3. Selbstregelnder Stossdämpfer für Fahrzeuge, mit selbstkorrigierender Dissipationscharakteristik entsprechend der Patentansprüche 1 und 2, charakterisiert durch
eine zweite Kolbenstange (42) ausgehend von der unteren Seite des Kolbens (2);
das Bodenstück des Innenrohres (44) ist ausgestattet mit einer ringförmigen Führung für die Kolbenstange (43) dimensioniert für Gleitsitz mit der zweiten Kolbenstange (42);
das untere Ende des Aussenrohres (199) ist ausgestattet mit einem Dichtungselement (45) gleitend abgedichtet mit der zweiten Kolbenstange (42).

4. Selbstregelnder Stossdämpfer für Fahrzeuge, mit selbstkorrigierender Dissipationscharakteristik entsprechend der Patentansprüche 1 bis 3, charakterisiert durch
ein kreisförmiger Balg (86) konzentrisch mit einem Aussenrohr (87) ist fixiert auf dem Aussenrohr (87) mittels zwei Befestigungsringe (88);
ein Gehäuse (90) solidarisch mit dem Aussenrohr (87) ist plaziert ringsum dem ringförmigem Balg (86), das Gehäuse (90) bildend zusammen mit dem ringförmigen Balg (86) einen Raum (c') gefullt mit Druckgas eingeführt durch eine Bohrung (d') im Gehäuse (90), die Bohrung (d') wird nach dem Füllen abgeschlossen;
das Aussenrohr (87) ist mit eine oder mehrere Bohrungen (b') fur den Oeldurchfluss versehen.

5. Selbstregelnder Stossdämpfer für Fahrzeuge, mit selbstkorrigierender Dissipationscharakteristik entsprechend der Patentansprüche 1 bis 4, charakterisiert durch
ein Aussenrohr (94) hat eine untere Ausweitung in welcher einem Trennkolben (95) einen oberen Raum (e') fur Ausgleich des Stangevolumens, und einen unteren Raum (j') plaziert am unteren Ende des Aussenrohres (94) und beinhaltend Druckgas;
das Aussenrohr (94) ist ausgestattet am unteren Ende mit einem Stützring (k') solidarisch mit dem Bodenstück des Innenrohres (93)angebracht für die obere Sicherheitsbegrenzung des Hubes des Trennkolbens (95), und ein Anschlag (96) für die untere Sicherheitsbegrenzung.

6. Selbstregelnder Stossdämpfer für Fahrzeuge, mit selbstkorrigierender Dissipationscharakteristik entsprechend der Patentansprüche 1 bis 5, charakterisiert durch
in dem Innenrohr (177)sind angebracht kalibrierte Bohrungen oder Schlitze (b"), (c"),(d"), deren Anzahl entspricht der gewünschten Dämpfungskennlinie.

7. Selbstregelnder Stossdämpfer für Fahrzeuge, mit selbstkorrigierender Dissipationscharakteristik entsprechend der Patentansprüche 1 bis 6, charakterisiert durch
das ganze oder verschiedene Segmente des Innenrohres (123) sind gefertigt aus porösem Material mit einer kontrollierten Kapillaritat.

8. Selbstregelnder Stossdämpfer für Fahrzeuge, mit selbstkorrigierender Dissipationscharakteristik entsprechend der Patentansprüche 1 bis 7, charakterisiert durch
mindestens ein Einstellventil (184) angebracht auf dem Innenrohr (180) ist einstellbarer Dämpfungsventil, bietend die Möglichkeit der langsamen oder rechtzeitigen Änderung der Dissipationscharakteristik, die Kontrolle des einstellbaren Ventils kann kontinuierlich, diskret oder in Schritte sein, mittels Einstellung der relativen Position der Schliesselemente, oder durch Kontrolle der Ausladebohrungen für die Flüssigkeit, oder durch Kontrolle der Druckkraft ausgeübt auf Federscheiben, oder durch Kontrolle der Dimensionen der kalibrierten Bohrungen oder Schlitzen, diese Kontrolle kann mechanisch, hydraulisch, pneumatisch, elektrisch oder elektromagnetisch sein, oder kann eine Kombination deren sein und ermöglicht die Realisierung eines einstellbaren oder halbaktiven Stossdämpfers.

9. Selbstregelnder Stossdämpfer für Fahrzeuge, mit selbstkorrigierender Dissipationscharakteristik entsprechend der Patentansprüche 1 bis 8, charakterisiert durch
die Aussenschliesskappe (31) ist ausgestattet mit einer zweiten ringformigen Kolbenstangeführung (33) und eine Abdichtung, um eine bessere Aufnahme der Radialkräfte zu ermöglichen.

10. Selbstregelnder Stossdämpfer für Fahrzeuge, mit selbstkorrigierender Dissipationscharakteristik entsprechend der Patentansprüche 1 bis 9, charakterisiert durch
Der Schliesskörper (34) ist ausgestattet mit einer ringförmiger Kolbenstangenführung (37), mit einer Dichtung (38) und mit mehrere Bohrungen oder Oeffnungen (m) für den Oeldurchfluss; und
Eine Aussenschliesskappe (40) abgedichtet am Schliesskörper (34) mit einem O-Ring (41).

11. Selbstregelnder Stossdämpfer für Fahrzeuge, mit selbstkorrigierender Dissipationscharakteristik entsprechend der Patentansprüche 1 bis 10, charakterisiert durch
im Kolben (129) befindet sich eine elastische Membrane (130) welche, zusammen mit den Innenwände des Kolbens(129);
zwei Räume bildet die Wände des Kolbens (129) sind ausgestattet mit kalibrierte Bohrungen(h"),(i");
zwischen der Membrane (130) und die Innenwände des Kolbens (129) befinden sich zwei Federn (131), (132), der Hub der Membrane (130) ist begrenzt von zwei Puffern (133), (134) gestützt von die Innenwände des Kolbens (129).

12. Selbstregelnder Stossdämpfer für Fahrzeuge, mit selbstkorrigierender Dissipationscharakteristik entsprechend der Patentansprüche 1 bis 10, charakterisiert durch
in dem Kolben (136) sind angebracht zwei Membranen (137), (138) auf beiden Seiten einer mittigen Scheidewand (139) um vier Räume (j"), (k"), (l"), (m") mit die Innenwände Kolbens (136) zu bilden;
die Räume (k"), (l") auf jeder Seite der Scheidewand (139) beinhalten ein Druckgas und kommunizieren mit den anderen Räume durch mehrere kalibrierte Bohrungen (p"), angebracht in der Schneidewand (139);
die Räume (j"), (m"), am oberen und unterem Teil des Kolbens (136) kommunizieren mit dem Arbeitsraum durch mehrere kalibrierte Bohrungen (n"), (o"), angebracht auf die gegenüberliegenden Seiten des Kolbens (136);
zwischen die gegenüberliegenden Seiten des Kolbens (136) und die elastische Membranen (137), (138) befinden sich die Federn (140), (141), (142), (143);
die Hube der elastischen Membranen (137), (138) sind begrenzt von den Puffern (144),(147) angeordnet auf die Innenseiten des Kolbens (136).

13. Selbstregelnder Stossdämpfer für Fahrzeuge, mit selbstkorrigierender Dissipationscharakteristik entsprechend der Patentansprüche 1 bis 10, charakterisiert durch
in dem Kolben (148) befinden sich zwei Arbeitsräume (g"), (r") mit gleichen oder ungleichen Durchmesser, die Arbeitsräume (g"), (r") sind getrennt durch eine sich in der Mitte des Kolbens (148) befindenden Scheidewand (151);
die Scheidewand (151) ist versehen mit mehrere Kommunikationsbohrungen oder Schlitze (u");
zwei kleine Kolben (149), (150) versehen mit Kolbenringe (152), (153) sind gleitend montiert in die Arbeitsräume (g"), (r");
hinter den kleinen Kolben (149), (150) ist Druckgas eingeführt;
die gegenüberliegende Seiten des Kolbens (148) sind ausgestattet mit Schlitze (s"), (t");
zwischen den kleinen Kolben (149), (150) und die Innenseiten des Kolbens (148) befinden sich vier Federn (154), (155), (156), (157); und
zwei Puffer (158), (161) sind angebracht auf den Innenseiten des Kolbens (148).

14. Selbstregelnder Stossdämpfer für Fahrzeuge, mit selbstkorrigierender Dissipationscharakteristik entsprechend der Patentansprüche 1 bis 10, charakterisiert durch
der erste Kolben (162) beinhaltet einen Arbeitsraum wo ein zweiter Kolben (164) gleitend montiert ist;
der zweite Kolben (164) beinhaltet einen Arbeitsraum (x"), wo ein dritter Kolben (163) gleitend montiert ist;
der dritte Kolben (163) ist mit einer Scheidewand (165) mit kalibrierte Bohrungen (z") ausgestattet, die Scheidewand (165) begrenzt zusammen mit dem unteren Ende des dritten Kolben (163) einen Raum (w");
der zweite und der dritte Kolben (163), (164) trennen den Arbeitsraum des ersten Kolben (162) in einem Zugraum (v") und einem Druckraum (y");
mehrere kalibrierte Bohrungen und Schlitze (a'"), (b'") sind angebracht in die gegenüberliegenden Wände des Kolbens (162);
zwischen der Scheidewand (165) und dem zweiten Kolben (163) ist eine Feder (166) eingefügt und ein Druckgas ist eingebracht, und ein Puffer (170) ist angebracht auf die Scheidewand (165);
zwischen den Oberflächen des zweiten und des dritten Kolben (163), (164) und die gegenüberliegenden Innenseiten des Kolbens (162) sind angebracht die Federn (167), (168);
auf den gegenüberliegenden Innenseiten des ersten Kolbens (162) sind angebracht die Puffer (169), (171);
die kleine Kolben (163), (164) sind versehen mit Kolbenringe (153).

15. Selbstregelnder Stossdämpfer für Fahrzeuge, mit selbstkorrigierender Dissipationscharakteristik entsprechend der Patentanspruch 14, charakterisiert durch
die Federn (167, 168) sind angebracht zwischen dem dritten Kolben (164) und die gegenüberliegende Innenseiten des Kolbens (164).

16. Selbstregelnder Stossdämpfer für Fahrzeuge, mit selbstkorrigierender Dissipationscharakteristik entsprechend der Patentansprüche 1 bis 15, charakterisiert durch
des Innenrohr (172) ist versehen bei unterschiedlichen Höhen mit eine oder mehrere kalibrierte Bohrungen oder Schlitze (c'"), und ringsum dem Innenrohr (172) auf der Höhe der
Bohrungen (c'") befindet sich wenigstens ein Ring (173) gefertigt aus ein Material mit Wärmeausdehnungsfaktor kleiner als der des Materials von welches das Innenrohr (172) gefertigt ist

17. Selbstregelnder Stossdämpfer für Fahrzeuge, mit selbstkorrigierender Dissipationscharakteristik entsprechend der Patentansprüche 1 bis 16, charakterisiert durch
das Innenrohr (174, 177) ist versehen bei der gewünschten Höhe mit einer oder mehreren kalibrierten Bohrungen oder Schlitze (d'"), oder (e'") gesteuert durch Plunger oder Schliessteile von verschieden Formen (175), (178), fest angebracht auf einem Aussenrohr (176), oder (179), und gefertigt aus Materialien mit Wärmeausdehnungsfaktor grösser als der des Materials von welches das Innenrohr (174) oder (177) gefertigt ist.

18. Selbstregelnder Stossdämpfer für Fahrzeuge, mit selbstkorrigierender Dissipationscharakteristik entsprechend der Patentansprüche 1 bis 17, charakterisiert durch
das Innenrohr (193) ist versehen bei der gewünschten Höhe mit eine oder mehrere kalibrierte Bohrungen oder Schlitze (f"), im deren Bereich ist ein ringförmiger Körper (194) welcher das Innenrohr (193) umringt, angebracht;
der ringförmige Körper (194) ist versehen mit eine oder mehrere kalibrierte Bohrungen oder Schlitze (g'") plaziert an derselben Höhe wie die Bohrungen oder die Schlitze (f");
die Drehung Schritt nach Schritt des ringförmigen Körpers (194) mit Bezug auf das Innenrohr (193) erlaubt die Überlappung Schritt nach Schritt der Bohrungen oder Schlitze (g'") mit den Bohrungen oder Schlitze (f'") in der gewünschten Kombination.

19. Selbstregelnder Stossdämpfer für Fahrzeuge, mit selbstkorrigierender Dissipationscharakteristik entsprechend der Patentansprüche 1 bis 18, charakterisiert durch
das Innenrohr (195) ist versehen bei der gewünschten Höhe mit eine oder mehrere Bohrungen oder Schlitze (h'"), in deren Bereich ist ein ringförmiger Körper (196) welcher das Innenrohr (195) umringt, angebracht;
der ringförmige Körper (196) ist ausgestattet mit eine oder mehrere kalibrierte Bohrungen oder Schlitze (i'") angebracht bei derselben Höhe wie die Bohrungen oder die Schlitze (h'");
die kontinuierliche Drehung des ringförmigen Körpers (196) mit Bezug auf das Innenrohr (195) ermöglicht die kontinuierliche Überlappung der Bohrungen oder der Schlitze (h'") mit die Bohrungen oder die Schlitze (i'") im gewünschtem Verhältnis.

20. Selbstregelnder Stossdämpfer für Fahrzeuge, mit selbstkorngierender Dissipationscharakteristik entsprechend der Patentansprüche 1 bis 19, charakterisiert durch
das Innenrohr (197) ist versehen bei verschiedenen Höhen mit kalibrierte Bohrungen oder Schlitze (j'"), (k'"), in deren Bereich ist ein ringförmiger Körper (198) welcher das Innenrohr (197) umringt, angebracht;
der ringförmige Körper (198) hat eine oder beide Enden (l'") mit gewünschtem Profil bearbeitet;
die Drehung des ringförmigen Körpers (198) mit Bezug auf das Innenrohr (197) stellt sicher die Verschliessung einer oder mehreren Bohrungen oder Schlitze (j'"), (k'").

## Revendications

1. Amortisseur auto-réglable à caractéristique dissipative autocorrective, destiné aux auto véhicules, comprenant:
un cylindre intérieur (3) formant une chambre de travail, le cylindre intérieur étant équipé à sa longueur d'une multitude de premières soupapes de réglage à la détente (18) et premières soupapes de réglage à la compression (19);
un piston (2) équipé d'une seconde soupape de réglage à la détente (17) et une seconde soupape de réglage à la compression (16) et monté glissant dans la chambre de travail et séparant la chambre de travail dans un compartiment (k) de compression et un compartiment (j) de détente, dont les volumes varient suivant la position du piston (2) dans la chambre de travail;
une tige (1) connectée au piston (2) et agrandie du bout de la chambre de travail, adjacente à la chambre de détente;
un cylindre extérieur (8) disposé autour du cylindre intérieur (3), le cylindre extérieur (8) formant une chambre réservoir entre le cylindre intérieur (3) et le cylindre extérieur (8);
un couvercle inférieur (4) du cylindre intérieur fermant le bout de la chambre de travail adjacent à la chambre de compression, et équipé d'une première soupape de remplissement (13) pour remplir à la détente;
un couvercle supérieur (5) du cylindre intérieur fermant le bout de la chambre de travail adjacent à la chambre de détente, le couvercle supérieur (5) du cylindre intérieur étant équipé d'un guidage circulaire de la tige(6) ou d'une ouverture (6) étant dimensionné pour ajustage glissant avec la tige (2), et d'un collet (c) rigide avec la parois intérieure du cylindre extérieur (8);
un couvercle extérieur (9) équipé d'un élément d'étanchement (10) ayant une ouverture centrale dimensionnée pour l'ajustage glissant de la tige (1);
**caractérisé** dans ce que
un système de labyrinthes(7) formé de quelques passages (i) positionne entre le couvercle supérieur (5) du cylindre intérieur et le couvercle extérieur (9), le compartiment entre le couvercle supérieur (5) du cylindre intérieur, le couvercle extérieur (9), la tige (2) et le cylindre extérieur (8) format une chambre de compensation (d);
un fluide remplit la chambre de travail et au moins partiellement remplit la chambre de compensation (d);
le couvercle supérieur (5) du cylindre intérieur est équipé d'une soupape secondaire de remplissement (15) pour remplir à la compression, et de quelques galeries de passage (g);
une pluralité d'une tierce soupape (20) de remplissement à la détente est assurée au bout inférieur du cylindre inférieur (3), et
une pluralité de la quatrième soupape de remplissement à la compression (21) est prévue au bout supérieur du cylindre (3).

2. Amortisseur auto réglable à caractéristique dissipative auto correctrice, destiné aux auto véhicules conformément à la revendication 1, **caractérisé** de la troisième soupape de réglage à la compression (12), placée dans la couvercle inférieur (4) du cylindre intérieur.

3. Amortisseur auto réglable à caractéristique dissipative auto correctrice, destiné aux auto véhicules, conformément aux revendications 1, ou 2 **caractérisé par** ce que
une deuxième tige (42) se rallonge sous l'envers du piston (2);
le couvercle inférieur (44) du cylindre intérieur est muni d'un guidage circulaire (43) ajusté glissant envers la seconde tige (42) du piston;
le couvercle inférieur (199) du cylindre extérieur est muni d'un élément d'étanchement (45) glissant enclencher envers la tige (42) du piston.

4. Amortisseur auto réglable à caractéristique dissipative auto correctrice, destiné aux auto véhicules, conformément aux revendications 1 à 3 **caractérisé par** ce que
une baudruche circulaire concentrique avec un cylindre extérieur (87) est fixé sur le cylindre extérieur (87) par deux anneaux de fixation (88);
une carcasse rigide (90) avec un cylindre extérieur (87) est disposée autour de la baudruche circulaire (86), la carcasse (90) formant ensemble avec la baudruche circulaire (86), une
chambre (c') remplie de gaz pressurisé introduit par un trou (d') pratiqué dans la carcasse (90), le trou (d') étant fermé après le remplissage;
le cylindre extérieur (87) contient un ou plusieurs trous (b') pour le passage de l'huile.

5. Amortisseur auto réglable à caractéristique dissipative auto correctrice, destiné aux auto véhicules, conformément aux revendications 1 à 4, **caractérisé par** ce que
un cylindre extérieur (94) a une extension inférieure où un piston flottant (95) forme une enceinte supérieure (e') pour compenser le volume de la tige, et une enceinte inférieure (j') placée au bout inférieur du cylindre extérieur (94) et contenant du gaz pressurisé;
le cylindre extérieur (94) est équipé à son bout inférieur d'un col (k') solidaire au couvercle inférieur (93) du cylindre intérieur pour la limitation supérieure de sûreté de la course du piston flottant (95), et d'un butoir (96) pour la limite inférieure de la sûreté.

6. Amortisseur auto réglable à caractéristique dissipative auto correctrice, destiné aux auto véhicules, conformément aux revendications 1 à 5, **caractérisé par** ce que
dans le cylindre intérieur (177) sont prévus des orifices calibrés ou des fentes (b"), (c"), (d"), leur nombre correspondant à la caractéristique désirée d'amortissement.

7. Amortisseur auto réglable à caractéristique dissipative auto correctrice, destiné aux auto véhicules, conformément aux revendications 1 à 6 **caractérisé par** ce que
tout ou différentes sections d'un cylindre intérieur (123) se confectionnent en matériau poreux à capillarité contrôlée.

8. Amortisseur auto réglable à caractéristique dissipative auto correctrice, destiné aux auto véhicules, conformément aux revendications 1 à 7, **caractérisé par** ce que
au moins une soupape de réglage (184) placée sur le cylindre intérieur (180) est une soupape réglable, ayant la possibilité de modifier la caractéristique d'amortissement, lentement ou bine en temps réel, le contrôle de la soupape réglable étant permanent, ou discrètement, ou pas à pas, par le contrôle de la position relative des éléments d'obturation, ou bien par le contrôle des orifices de déchargement, ou par le contrôle de la force de pression des plates des soupapes ou par le contrôle de la dimension des orifices calibrés ou des fentes, étant réalisé mécaniquement, hydrauliquement, pneumatiquement, électriquement ou électromagnétiquement, ou bien par leur combinaison, en permettant la réalisation d'un amortisseur réglable ou semi-actif.

9. Amortisseur auto réglable à caractéristique dissipative auto correctrice, destiné aux auto véhicules, conformément aux revendications 1 à 8, **caractérisé par** ce que
le couvercle extérieur (31) est équipé d'un guidage secondaire circulaire (33) et un élément d'étanchement, pour une meilleure assimilation des efforts latéraux.

10. Amortisseur auto réglable à caractéristique dissipative auto correctrice, destiné aux auto véhicules, conformément aux revendications 1 à 9, **caractérisé par** ce que
le couvercle supérieur (34) du cylindre intérieur est équipé d'un guidage circulaire (37), d'un coussinet d'étanchement (38) et de quelques trous ou bien d'ouvertures (m) pour le passage de l'huile;
et
un couvercle extérieur (40) est étanché au couvercle supérieur (34) du cylindre intérieur à un anneau-O (41).

11. Amortisseur auto réglable à caractéristique dissipative auto correctrice, destiné aux auto véhicules, conformément aux revendications 1 à 10, **caractérisé par** ce que
à l'intérieur du piston (129) on a prévu une membrane élastique (130) formant deux enceintes (f"), (g"), avec les parois intérieures du piston (129);
les parois du piston (129) sont équipées d'orifices calibrés (h"), (i");
entre la membrane (130) et les parois intérieures du piston (129) il y a deux ressorts (131), (132), la course de la membrane (130) étant limitée par des sabots (133), (134) soutenus par les parois intérieures du piston (129).

12. Amortisseur auto réglable à caractéristique dissipative auto correctrice, destiné aux auto véhicules, conformément aux revendications 1 à 10, **caractérisé par** ce que
à l'intérieur du piston (136) deux membranes (137), (138) sont placées des deux côtés d'un diaphragme central (139) pour former quatre chambres (j"), (k"), (l"), (m"), avec les parois intérieures du piston (136);
les chambres (k"), (l") des deux parties du diaphragme (139) contient un gaz pressurisé et communiquent entre elles par quelques orifices calibrés (p") placés dans le diaphragme (139); les chambres (j"), (m") prévues à la partie supérieure ou inférieure du piston (136) communiquent avec la chambre de travail par quelques orifices calibrés (n"), (o"), placés dans les surfaces opposées du piston (136);
entre les surfaces opposées du piston (136) et les membranes élastiques (137), (138) sont disposés les ressorts (140), (141), (142), (143);
les courses des membranes élastiques (137), (138) sont limitées par des tampons (144), (147) disposés sur les parois intérieures du piston (136).

13. Amortisseur auto réglable à caractéristique dissipative auto correctrice, destiné aux auto véhicules, conformément aux revendications 1 à 10, **caractérisé par** ce que
à l'intérieur du piston (148) il y a deux chambre de travail (g"), (r") de diamètres égaux ou inégaux, les chambres de travail (g"), (r") étant séparées par un diaphragme (151) placé dans la zone centrale du piston (148);
le diaphragme (151) contient quelques orifices calibrés ou fentes (u");
deux petits pistons (149), (150) équipés de segments (152), (153) sont montés en glissant dans les chambres de travail (g"), (r");
derrière les petits pistons (149), (150) est introduit un gaz pressurisé.
les faces opposées du piston (148) ont des fentes (s"), (t");
entre les petits pistons (149), (150) et les faces intérieures du piston (148) il y a quatre pistons (154), (155), (156), (157) insérés; et
deux tampons (158), (161) sont placés sur les faces intérieures du piston (148).

14. Amortisseur auto réglable à caractéristique dissipative auto correctrice, destiné aux auto véhicules, conformément aux revendications 1 à 10, **caractérisé par** ce que
le premier piston (162) contient une chambre de travail (x"), où un deuxième piston (164) est monté glissant;
le deuxième piston (164) contient une chambre de travail (x"), où un troisième piston (163) est monté glissant;
le troisième piston (163) contient un diaphragme (165) aux orifices calibrés (z"), le diaphragme (165) définit une enceinte (w") avec le fond du troisième piston (163);
le deuxième et le troisième pistons (163), (164) séparent la chambre de travail du premier piston (162) dans un compartiment de détente (v") et un compartiment de compression (y");
quelques orifices ou fentes (a'''), (b''') sont disposés dans les parois opposées du piston (162);
entre le diaphragme (165) et le deuxième piston (163) il y a un ressort inséré (166) et on introduit du gaz pressurisé, et un tampon (170) est prévu sur le diaphragme (165);
entre les surfaces du deuxième et du troisième pistons (163), (164) et les surfaces opposées intérieures, du piston (162) il y a les ressorts (167), (168) disposés;
sur les surfaces intérieures opposées du premier piston (162) les tampons (169), (171) sont disposés;
les petits pistons (163), (164) sont prévus avec des segments (153).

15. Amortisseur auto réglable à caractéristique dissipative auto correctrice, destiné aux auto véhicules, conformément aux revendication 14, **caractérisé par** ce que
les ressorts (167), (168), sont disposés entre le troisième piston (164) et les surfaces intérieures opposées du piston (164).

16. Amortisseur auto réglable à caractéristique dissipative auto correctrice, destiné aux auto véhicules, conformément aux revendications 1 à 15, **caractérisé par** ce que
le cylindre intérieur (172) est muni aux différents niveaux d'un ou de plusieurs orifices calibrés ou fentes (c"'), et autour du cylindre intérieur (172) au niveau des trous (c"') se trouve placé au moins un anneau (173) confectionné en matériel ayant le coefficient de dilatation thermique plus petit que celui du matériel dont on a confectionné le cylindre intérieur (172).

17. Amortisseur auto réglable à caractéristique dissipative auto correctrice, destiné aux auto véhicules, conformément aux revendications 1 à 16, **caractérisé par** ce que
le cylindre intérieur (174, 177) est muni au niveau désiré d'un ou de plusieurs orifices calibrés ou fentes (d"'), ou (e"') contrôlés par des pistons plongeurs pointus ou plates de formes différentes (175), (178), fixés sur un cylindre extérieur (176), ou (179), et confectionnés en matériaux à coefficient de dilatation thermique plus grand que celui du matériau dont est confectionné le cylindre intérieur (174) ou (177).

18. Amortisseur auto réglable à caractéristique dissipative auto correctrice, destiné aux auto véhicules, conformément aux revendications 1 à 17, **caractérisé par** ce que
le cylindre intérieur (193) est muni au niveau désiré d'un ou de plusieurs orifices calibrés ou fentes (f''') dans la zone desquels est placé un corps circulaire (194) qui entoure le cylindre intérieur;
le corps circulaire (194) est muni d'un ou de plusieurs orifices calibrés ou fentes (g"') placés au même niveau que les trous ou les fentes (f''');
la rotation pas à pas du corps circulaire (194) par rapport au cylindre intérieur (193) permet la superposition par des pas des orifices ou fentes (g"') avec les orifices ou fentes (f''') dans la combinaison désirée.

19. Amortisseur auto réglable à caractéristique dissipative auto correctrice, destiné aux auto véhicules, conformément aux revendications 1 à 18, **caractérisé par** ce que
le cylindre intérieur (195) est muni au niveau désiré d'un ou plusieurs orifices calibrés ou fentes (h"') dans la zone desquels est placé un corps circulaire (196) qui entoure le cylindre intérieur (195);
le corps circulaire (196) est muni d'un ou plusieurs orifices calibrés ou fentes (i"') placés au même niveau que les orifices ou fentes (h"');
la rotation continue du corps circulaire (196) par rapport au cylindre intérieur (195) permet la superposition continue des orifices ou des fentes (h"') avec les orifices ou les fentes (i"') dans le rapport désiré.

20. Amortisseur auto réglable à caractéristique dissipative auto correctrice, destiné aux auto véhicules, conformément aux revendications 1 à 19, **caractérisé par** ce que
le cylindre intérieur (197) contient aux différents niveaux un ou plusieurs orifices calibrés ou fentes (j"'), (k"') dans la zone desquels est placé un corps circulaire (198) qui entoure le cylindre intérieur (197);
le corps circulaire (198) a une ou les deux têtes (l"') profilées convenablement;
la rotation du corps circulaire (198) envers le cylindre intérieur (197) assure l'obturation d'un ou de plusieurs orifices ou fentes (j"'), (k"').
